# EUROPEAN PATENT SPECIFICATION

(11) **EP 0 526 810 B1**
(45) Date of publication and mention of the grant of the patent: **15.05.1996**
(21) Application number: 92112644.7
(22) Date of filing: 24.07.1992
(51) Int. Cl.: C08F 10/14, C08F 4/655

(54) **Polymerization process to prepare a polyolefin from sterically hindered, methyl branched, alpha-olefins**
Polymerisationsverfahren zur Herstellung von Polyolefinen aus sterisch gehinderten methylverzweigten, Alpha-Olefinen
Procédé de polymérisation pour la préparation d'une polyoléfine à partir de d'oléfines stériquement empêchés, méthyl ramifiée

(30) Priority: 26.07.1991 US 736653
(43) Date of publication of application: 10.02.1993
(73) Proprietor: PHILLIPS PETROLEUM COMPANY, Bartlesville Oklahoma 74004 (US)
(72) Inventor: Sutherlin, Dirk Morton, Bartlesville, OK 74006 (US); Fodor, Lawrence Martin, Bartlesville, OK 74006 (US)
(74) Representative: Dost, Wolfgang, Dr.rer.nat., Dipl.-Chem.

(56) References cited:
- EP-A- 0 101 615
- PATENT ABSTRACTS OF JAPAN vol. 10, no. 31 (C-327)(2088) 6 February 1986 & JP-A-60 184 510

## Description

### BACKGROUND OF THE INVENTION

This invention relates to polymerizing alpha-olefins which have a methyl branch at the 3-position.

Thousands of processes are known for polymerizing linear and branched alpha-olefins. Branched alpha-olefins tend to be harder to polymerize than linear alpha-olefins. This is due, in part, to the steric hindrances to the polymerization process. It is generally accepted that as the branching substituent is positioned nearer to the double bond, the ability to polymerize the branched alpha-olefin correspondingly decreases. However, these branched alpha-olefins upon polymerization yield polymers which tend to have higher melting points and better chemical resistance than their linear cousins while retaining good electrical properties.

An example of a polymerizable branched alpha-olefin is 3-methyl-1-butene. Various processes in the art have produced poly(3-methyl-1-butene) in characteristically low yields. This is due to the steric hindrance imposed by the branched methyl group of the monomer which inhibits polymerization. It has long been recognized that long residence times and high polymerization temperatures were necessary in order to overcome this steric hindrance effect. Typically, polymerization of 3-methyl-1-butene has been reported as anywhere from about 2 grams of polymer produced per gram of catalyst, to about 400 grams of polymer produced per gram of catalyst. Therefore, a process which produced poly(3-methyl-1-butene) in better yields would make the commercial production of poly(3-methyl-1-butene) more economical. Furthermore, a process which polymerized these sterically hindered, methyl branched at the 3-position, alpha-olefins would be of great scientific and economic value.

### SUMMARY OF THE INVENTION

It is an object of this invention to provide an improved polymerization process for preparing a polyolefin from sterically hindered, methyl branched at the 3-position, alpha-olefins.

It is another object of this invention to provide an improved polymerization process for poly(3-methyl-1-butene).

It is still another object of this invention to provide an improved polymerization process for 3-methyl-1-pentene.

It is yet another object of this invention to provide a composition of matter, which prior to subjecting said composition of matter to a catalyst removal process, contains less than 27 parts per million by weight of titanium, and where said composition of matter is made from an alpha-olefin which has a methyl group at the 3-position.

In accordance with this invention a process is provided comprising contacting under polymerization conditions: at least one trialkylaluminum cocatalyst; at least one alpha-olefin which has a methyl branch at the 3-position and which has at least five carbon atoms; with a catalyst prepared by the process comprising comminuting, at least one aluminum halide, at least one electron donor, at least one metal compound wherein the metal is selected from the group consisting of chromium, hafnium, molybdenum, niobium, tantalum, titanium, tungsten, vanadium, zirconium, and mixtures thereof, a salt compound wherein at least one component of said salt compound is selected from the group consisting of barium, beryllium, calcium, magnesium, strontium, zinc, and mixtures thereof, to produce a comminuted solid then subjecting said comminuted solid to a double activation-extraction step; to produce a polymer at a productivity level of at least 700 grams of polymer per gram of catalyst utilized.

### DETAILED DESCRIPTION OF THE INVENTION

### CATALYST SYSTEM

### Aluminum Halide Component

The term aluminum halide is used to refer to aluminum compounds having at least one halogen bonded directly to the aluminum. Included are aluminum halide compounds of the formula:

R_{y}AIX_{z}

wherein R is an alkyl, aryl, or cycloalkyl group; X is fluorine, chlorine, bromine, or iodine; z is 1, 2, or 3 and z + y = 3.
Examples include:
AlCl₃;
Al-dichloro-phenoxy;
Al-mono-chloro-diphenoxy;
Al-dichloro-xylenoxy;
Al-mono-chloro-dixylenoxy;
Al-dichloro-2,6-t-butyl-p-cresoxy;
Al-dichloro-octoxy; and
Al-monoethyl-dichloride.

Presently the most preferred is AlCl₃.

### Electron Donor Component

Examples of electron donors include organic compounds having at least one atom of oxygen, sulfur, nitrogen, or phosphorus which can function as the electron donor. More specifically, the term electron donor is used to include ethers, esters, ketones, aldehydes, alcohols, carboxylic acids, phenols, thioethers, thioesters, thioketones, amines, amides, nitriles, isocyanates, phosphites, phosphoryl compounds, and phosphines. Typically it is preferred to use compounds having no more than 16 carbon atoms per molecule. It is currently believed that aromatic ethers and the esters of aromatic acids are the most useful electron donors.

In an especially preferred embodiment both an aromatic ester and an aromatic ether are employed. The more common esters are those derived from carboxylic acids having 1 to 12 carbon atoms and alcohols having 1 to 12 carbon atoms. The more common ethers are those containing 2 to 12 carbon atoms and 1 to 10 ether oxygen atoms. Typical examples of the aromatic esters include the alkyl and aryl esters of aromatic carboxylic acids such as benzoic, toluic, p-methoxybenzoic, and phthalic acid. Some specific examples include ethyl benzoate, methyl benzoate, methyl p-toluate, ethyl p-toluate, and methyl anisate. The term aromatic ethers is intended to include those ethers having two aromatic groups as well as those having one aromatic group and one alkyl group. Some specific examples include methoxybenzene, phenetole, diphenyl ether, phenylallyl ether, and benzofuran. The currently most preferred combination is ethyl benzoate and methoxybenzene.

### Metal Compound Component

The metal compound component includes tri, tetra, and pentavalent metal compounds. Examples include compounds of the formula MOₚ(OR)ₘ-X₍ₙ₋₂ₚ₋ₘ₎ wherein M is a metal selected from the group consisting of chromium, hafnium, molybdenum, niobium, tantalum, titanium, tungsten, vanadium and zirconium, with a valency of n=3, 4, or 5, O is oxygen, p is 0 or 1, R is an alkyl, aryl, cycloalkyl group or substituted derivative thereof, X is a halide and n≥m≥0. In practice the metal is generally selected from the group consisting of chromium, titanium, vanadium, and zirconium. In the preferred embodiment, the metal is titanium. The choice of a particular metal compound within the above formula will depend upon the reaction conditions and other constituents present in the catalyst. Some examples of metal compounds having polymerization activity are TiCl₄, Ti(OCH₃)Cl₃, Ti(OCH₂CH₃)Cl₃, VCl₃, VOCl₂, VOCl₃ and VO(OCH₃)Cl₂. In a preferred embodiment liquid titanium tetrachloride is used as the metal compound.

### Salt Component

Included within the scope of salts referred to above are the halogen containing compounds of barium, beryllium, calcium, magnesium, strontium, and zinc. Specific examples of such compounds include magnesium chloride, magnesium bromide, calcium chloride, zinc chloride and magnesium hydroxychloride. It is currently believed that the best salt components are the salts of magnesium. Typical examples of such salts include magnesium dihalides, alkyloxides, aryloxides, and combinations thereof. The preferred salt components are M(OR)ₙX₍₂₋ₙ₎ where M is magnesium, R is an alkyl or aryl radical, X is a halide and n is 0, 1, or 2. Some typical examples of salts having such a formula are MgCl₂, MgBr₂, MgF₂, Mg(OCH₃)₂, Mg(OCH₂CH₃)₂, Mg(OC₆H₅)₂. It is within the scope of the invention to employ mixtures of such salts. The currently most preferred embodiment employs magnesium halides, especially magnesium chloride. The molar proportions of the components are illustrated by the table below.

| Table of the molar proportions of the catalyst components based on one mole of metal compound component | | | |
|---|---|---|---|
| Component | Broad Range | Preferred Range | Most Preferred |
| Salt Compound | 8≥S.C.≥80 | 10≥S.C.≥80 | 14≥S.C.≥16 |
| Aluminum Halide Compound | 1≥AHC≥5 | 1.25≥AHC≥3.0 | 1.5≥AHC≥2.5 |
| Electron Donor Compound | 1≥EDC≥10 | 1.5≥EDC≥8 | 2≥EDC≥7 |

An example of a preferred catalyst and the molar proportions of its components is:
(1) 1 mole of TiCl₄ (metal compound component)
(2) 15 moles of MgCl₂ (salt compound component)
(3) 2 moles of AlCl₃ (aluminum halide component)
(4) 3 moles of C₆H₅CO₂C₂H₅ and
   2 moles of C₆H₅OCH₃; for a total of 5 moles of (electron donor compound components)

### Preparation of the Catalyst

The term comminuting is used herein to refer to grinding or pulverization of the components. This term is used to distinguish over simple mixing which does not result in any substantial alteration of the particle size of the components of the catalyst. One method to attain such comminuting is by using a ball, pebble, or rod mill. Basically, these mills are used for the size reduction of materials prior to processing. They are generally made up of a rotating drum which operates on a horizontal axis and which is filled partially with a free-moving grinding medium which is harder and tougher than the material to be ground. The tumbling action of the grinding medium (balls, pebbles, or rods) crushes and grinds the material by a combination of attrition and impact. Grinding generally requires several hours to assure the necessary fineness within particle size limits.

A method of producing the above catalyst system comprises the comminution of the components preferably under an inert atmosphere in a ball or vibration type mill. The salt component is initially charged into the mill. If the salt component contains water which must be removed, a sufficient quantity of dehydrating agent is initially added to the salt component and the resulting mixture is comminuted at temperatures between 0 and 90°C for 15 minutes to 48 hours. Preferably this comminuting is from 6 to 24 hours, optimally for about 15 hours, at temperatures between 35 and 50°C so that the salt component becomes substantially anhydrous. It is preferred that the catalyst components be substantially anhydrous because the catalyst system is susceptible to water and air degradation. It is important that the water content of the catalyst be sufficiently low so as not to substantially interfere with the catalytic activity. Usually it is only the salt component which carries a possibility of a significant amount of water within its composition. Therefore, drying the salt component prior to use is generally preferred. Further examples of various methods to dehydrate the components of the catalyst are disclosed in US-A-4 680 351.

Although comminution may take place at temperatures between 0 and 90°C, the preferred comminuting temperature is from 20 to 40°C with a range of 30°C to 34°C being most preferred. Comminution time varies but may range from 15 minutes to 48 hours. Preferred comminution times are from 12 to 20 hours and most preferably are from 14 to 18 hours. Insufficient comminution will not yield a homogeneous composition, while over comminuting may cause agglomerization or may significantly decrease particle size of the catalyst composition causing a possible reduction in the particle size of the polymers produced from the catalyst system. The comminution of the components can be carried out in any order. The components can be added one at a time with additional comminution with each newly added component or several of the components can be combined first and comminuted simultaneously. It is also possible to combine some of the components before combining with a comminuted product. Currently the most preferred technique involves comminuting the salt component and the aluminum halide component, then comminuting that product with one or more electron donors and then comminuting that product with the metal compound component. Further examples of various methods to comminute the components are disclosed in US-A-4 680 351.

The solid obtained as described above is then contacted with a liquid under conditions sufficient to extract aluminum from the solid and to further increase the activity of the catalyst. The amount of the extraction/activation liquid employed can vary but, typically, it would be employed in such an amount that the resulting slurry would contain 10 to 40 weight percent solids based on the total weight of the liquid and solids, more preferably 20 to 30 weight percent solids. The actual temperature and time for the extraction/activation can vary depending on the results desired. Typically the extraction/activation would be conducted at a temperature in the range of 40 to 120°C. Generally, however, the temperature should be kept below the boiling point of the liquid having the lowest boiling point. It is currently preferred to use a temperature in the range of 60 to 110°C, more preferably 85 to 105°C. It is currently preferred to contact the catalyst with the liquid for 0.5 to 5 hours, most preferably from 1 to 3 hours.

Any suitable organic compounds in combination with titanium tetrachloride can be employed as the extraction/activation liquid. The currently preferred organic compounds are hydrocarbons. Some typical examples include heptane, pentane, 2,3-dimethylpentane, hexane, benzene, toluene, xylene, and ethyl benzene. It is currently preferred to use a combination of aromatic and paraffinic hydrocarbons, for example, heptane and toluene. The results obtained will vary depending on the specific extraction/activation liquid employed. For the preferred heptane/toluene/titanium tetrachloride mixture, the heptane would generally account for 50 to 70 weight percent of the liquid, more preferably, the heptane would account for 54 to 62 weight percent of the liquid, the toluene would generally account for 30 to 50 weight percent of the liquid, more preferably the toluene would account for 34 to 42 weight percent of the liquid, and the titanium tetrachloride would account for 1 to 20 weight percent of the liquid, more preferably 1 to 10 weight percent.

It is currently preferred that after the extraction/activation is conducted that the solid component be separated from the liquid component. This subsequently attained solid component should then again be subjected to an extraction/activation step similar to the previous extraction/activation step. Further examples of various methods to extract/activate the components are disclosed in US-A-4 680 351. A preferred method of preparing the catalyst is disclosed in Example I of this specification.

### COCATALYSTS

The catalyst system produced by the foregoing methods disclosed above and in the references cited, and as illustrated in Example I, are preferably used in conjunction with a cocatalyst of an organometallic compound. The organometallic compound cocatalyst is selected from the group consisting of trialkylaluminums. For example, preferred cocatalysts are triethylaluminum, trimethylaluminum, and triisobutylaluminum. The molar ratio of organometallic cocatalyst to titanium-containing catalyst component employed can vary but may range up to about 400 to 1. However, close attention should be paid to the aluminum/titanium mole ratios, in the final total catalyst/cocatalyst package, because certain mole ratios of these components are preferred over other mole ratios when considering productivity and the weight percent of solubles in the reactor. The term "solubles" is defined in this specification as the amount of soluble polymer left in the monomer and/or diluent. The weight percent of solubles is based on the total polymer weight both soluble and insoluble (See Example VIII).

### POLYMERIZATION CONDITIONS

The olefins which can be polymerized using this process are those olefins which have a methyl branch at the 3-position. Furthermore, these alpha-olefins should have between 5 and 21 carbon atoms in the molecule inclusive. Examples of such olefins are 3-methyl-1-butene, 3-methyl-1-pentene, 3-methyl-1-hexene, 3-methyl-1-heptene, 3-methyl-1-octene, 3-methyl-1-nonene and 3-methyl-1-decene. The preferred reactor temperature for polymerizing these monomers is in the range of 60°C to 120°C. Preferably it is in the range of 85°C to 115°C and most preferably from 90°C to 110°C. Temperatures higher than 120°C usually result in catalyst degradation to the point that polymerization results in significantly reduced yield and temperatures below 60°C tend to result in productivities which are not commercially viable for these types of monomers. The reactor residence time of the catalyst varies. Usually, however, it is in the range of 0.1 to 4 hours. Preferably it is in the range of 0.25 to 2 hours and most preferably it is in the range of 0.5 to 1.5 hours. Additionally, hydrogen can be charged to the reactor in order to facilitate the polymerization. However, it should be noted that higher levels of hydrogen after a certain point tend not to significantly effect the productivity of the polymerization reaction. It should also be noted, however, that this hydrogen effect seems related to the particular type of monomer used in the polymerization. Therefore, some leeway and experimentation should be done in order to determine the optimum hydrogen concentration when considering the various production variables (see Example VI). The production of poly(3-methyl-1-butene) suggests that the aluminum/titanium mole ratio should also be regulated. The data indicate that an aluminum/titanium mole ratio between 10 to 60 is best. Preferably, however, this ratio is between 15 to 55 and most preferably it is between 25 to 50, for the polymerization of 3-methyl-1-butene.

### Examples

These examples are provided to further assist a person skilled in the art with understanding this invention. The particular reactants, conditions, and the like, are intended to be generally illustrative of this invention and are not meant to be construed as unduly limiting the reasonable scope of this invention.

### Example I: Preparation of a Typical Catalyst Used in This Invention

This example illustrates a preferred method of making the catalyst. This method is similar to those methods disclosed in US-A-4 555 496 and US-A-4 680 351.

The components of the catalyst were comminuted in a nitrogen purged 250 liter ball mill. To this ball mill was added:
[1] 58.5 kg (130.0 pounds) of anhydrous magnesium chloride (MgCl₂);
[2] 11 kg (24.5 pounds) of aluminum chloride (AlCl₃).

The temperature of the ball mill was then brought to a temperature in the range of 30°C to 34°C. The contents of the ball mill were then ball milled for 16 hours. During this ball milling and in all subsequent ball millings the temperature was maintained between 30°C and 34°C. To the ball mill was then added:
[3] 18.6 kg (41.4 pounds) of ethyl benzoate (C₆H₅CO₂C₂H₅).

The ethyl benzoate was slowly added over a period of 1 hour while the ball mill was milling. After the addition of ethyl benzoate was completed the ball mill was allowed to mill an additional 2 hours. To the ball mill was then added:
[4] 11.2 kg (24.8 pounds) of methoxybenzene (C₆H₅OCH₃).

The methoxybenzene was slowly added over a period of 0.5 hours while the ball mill was milling. After the addition of the methoxybenzene was completed the ball mill was allowed to mill an additional 2.5 hours. To the ball mill was then added:
[5] 8 kg (17.7 pounds) of titanium tetrachloride (TiCl₄).

The titanium tetrachloride was slowly added over a period of 0.5 hours while the ball mill was milling. After the addition of the titanium tetrachloride was completed the ball mill was allowed to mill an additional 16 hours. The resulting solid was then recovered from the ball mill and screened to remove +0.84 mm (+20 mesh) course material. A portion of the finer resulting material obtained after the screening was subjected to the following double activation/extraction process. To a 0.076 m³ (20 gallon) glass jacketed stainless steel reactor equipped with a 200 rpm agitator the following was added:
[1] 11.7 kg (26.0 pounds) of the screened material;
[2] 21.1 kg (46.8 pounds) of heptane (CH₃(CH₂)₅CH₃);
[3] 14 kg (31.2 pounds) of toluene (C₆H₅CH₃);
[4] 1.9 kg (4.2 pounds) of titanium tetrachloride.

The reactor was then heated to a temperature between 95°C and 100°C. This temperature was maintained for 2 hours. During these heating steps the reactor was constantly agitated. The resulting mixture was then immediately filtered to recover the solid material. To the reactor was then added:
[5] the filtered solid material;
[6] 21.1 kg (46.8 pounds) of heptane;
[7] 14 kg (31.2 pounds) of toluene;
[8] 1.9 kg (4.2 pounds) of titanium tetrachloride.

The reactor was then heated to a temperature between 95°C and 100°C. This temperature was maintained for 2 hours. During these heating steps the reactor was constantly agitated. The resulting mixture was then immediately filtered to recover the solid material. To the reactor was then added:
[9] the solid material;
[10] 11.7 kg (26.0 pounds) of heptane.

The reactor was then agitated for 0.25 hours. After the agitation was complete the resulting mixture was filtered to recover the solid material. To this solid material was added:
[11] 11.7 kg (26.0 pounds) of heptane.

The resulting slurry was then collected as the catalyst used in the following inventive examples.

### Example II: Initial Catalyst Survey

In this example a variety of transition metal catalysts were evaluated at reaction temperatures between 60°C and 120°C in a series of 4 hour runs. A total of 8 different catalysts were used in this initial survey. These catalysts are described in Table IIA.

**Table IIA**

| Catalyst | Weight Percent of Metal Components ^{a}ʼ^{c} | | | Comments^{b} |
|---|---|---|---|---|
| | Ti | Mg | Al | |
| A | 2.2 | 20.9 | .68 | Catalyst used in this invention |
| B | 1.7 | 18.3 | - | |
| C | 15.5 | - | - | Titanium trichloride with 50 wt% polypropylene prepolymer |
| D | 21.8 | - | - | Titanium Chloride with 30 wt% stereoregulator |
| E | 31.1 | - | - | Titanium trichloride |
| F | 0.4 | 3.9 | - | Catalyst with 80 wt% polypropylene prepolymer |
| G | 2.0 | 19.5 | - | Same catalyst as F without the prepolymer |
| H | 24.1 | - | 4.5 | |

| | | | | |
|---|---|---|---|---|
| a "-" indicates zero or a trace amount. | | | | |
| b Catalysts B through H are catalysts known for their polymerization ability with propylene. | | | | |
| c The weight percents were determined by Plasma analysis. | | | | |

A reactor residence time of 4 hours was used in all runs. This time was selected on the basis of early work which suggested that longer residence times are necessary in order to optimize polymer yield. It has since been discovered that shorter residence times are adequate for some of the catalysts surveyed. Triethylaluminum was used as the cocatalyst for this study. Regardless of catalyst charge, the same amount of triethylaluminum (TEA) (4.63mmol, 5.0 mL of a 15 wt% solution in heptane) was used in each run. This lead to the broad disparity in the aluminum/titanium ratios shown in Table IIB below.

All of the polymerizations were performed in a 3.8·10⁻³ m³ (one gallon), stainless steel Autoclave Engineers reactor. Under a purge of nitrogen, the reactor was charged with the selected catalyst, 5.0 milliliters of triethylaluminum solution, and then sealed. 3-Methyl-1-butene was drained into the reactor from a 2.0 liter reservoir followed by a pressure drop of 0.27 MPa (25 psig) from a 300 milliliter cylinder of hydrogen. The reactor was then heated to the desired temperature and held there for 4 hours. After this time, a mixture of acetylacetone and propylene oxide were added to deactivate the catalyst. Unreacted monomer was then drained from the bottom of the reactor into a grounded aluminum pan. The polymer was then washed with 2 liters of n-heptane at 80°C for 30 minutes, then removed from the reactor, and dried in an aluminum pan at 75°C for 2 hours.

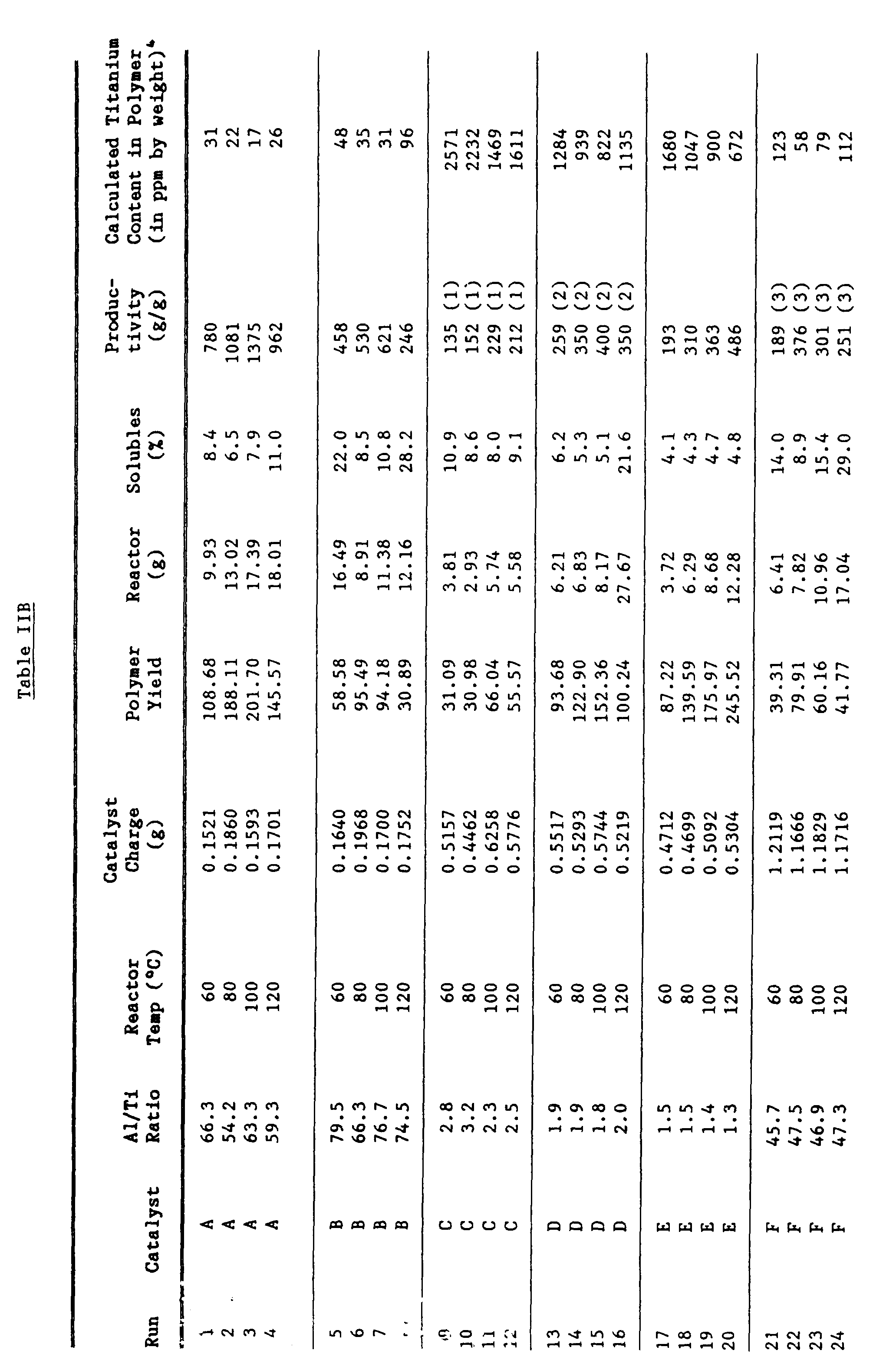

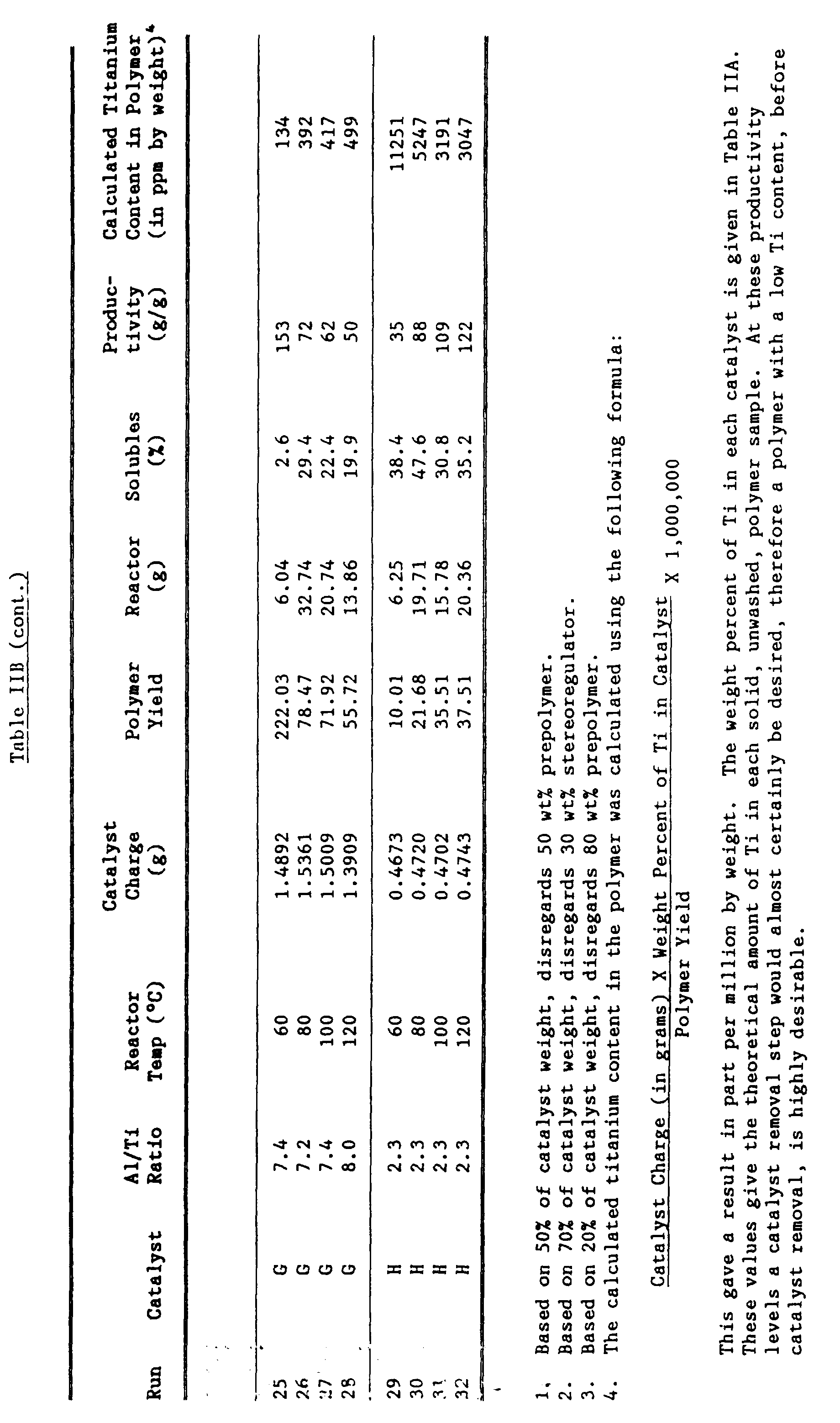

It is apparent from Table IIB that inventive catalyst A is by far the best catalyst of those screened for this type of polymerization. Although this productivity is much less than the catalyst productivity reported for such commercial production operations as polyethylene and polypropylene, it is still at least 2 to 4 times higher than what has previously been reported in the literature for the polymerization of 3-methyl-1-butene. Furthermore, the yield of poly(3-methyl-1-butene) with catalyst A is high enough to produce this specialty polymer in a commercially viable process.

### Example III: Polymerization of 3-methyl-1-butene, 3-methyl-1-pentene and 3-ethyl-1-hexene

A further study was done to compare the productivity of various catalysts for polymerizing the above-mentioned monomers. All of the runs were performed using a procedure similar to the procedure in Example II.

| Table III³ | | | | | | | |
|---|---|---|---|---|---|---|---|
| Run | Catalyst Type | Monomer | Catalyst (g) | Yield (g) | Reactor-Solubles | | Productivity (g/g) |
| | | | | | (g) | (wt.%) | |
| 3 | A | 3MB1 | 0.1593 | 201.70 | 17.39 | 7.9 | 1375 |
| 11 | C¹ | 3MB1 | 0.6258 | 66.04 | 5.74 | 8.0 | 229 |
| 19 | E | 3MB1 | 0.5092 | 175.97 | 8.68 | 4.7 | 363 |
| 33 | A1 | 3MB1 | 0.1493 | 26.70 | 30.47 | 53.3 | 383 |
| 34 | A1 | 3MP1 | 0.1641 | 15.09 | 45.46 | 75.0 | 369 |
| 35 | A2 | 3MP1 | 0.1712 | 114.06 | 23.65 | 17.1 | 804 |
| 36 | A | 3MP1 | 0.1763 | 375.23 | 23.34 | 5.6 | 2261 |
| 37 | C¹ | 3MP1 | 0.9947 | 63.17 | 31.39 | 33.1 | 190 |
| 38 | D | 3MP1 | 0.5081 | 89.88 | 23.10 | 20.4 | 318 |
| 39 | A | 3EH1 | 0.3049 | 4.53 | 12.04 | 72.6 | 54 |

| | | | | | | | |
|---|---|---|---|---|---|---|---|
| ¹See footnote 1 in Table IIB. | | | | | | | |
| See footnote 2 in Table IIB | | | | | | | |
| ³Catalyst A1 is made the same way as Catalyst A except no electron donors are added and Catalyst A1 was not subjected to a double activation/extraction. Catalyst A2 is made the same way as Catalyst A except Catalyst A2 was not subjected to a double activation/extraction. Runs 3, 11, 19, and 33 polymerized 3-methyl-1-butene (3MB1) at 100°C and 4 hour reactor residence time with 0.27 MPa (25 psig) of hydrogen. Runs 34-38 polymerized 3-methyl-1-pentene (3MP1) at 100°C for 2 hour reactor residence time and 0.45 MPa (50 psig) of hydrogen. Runs 39 polymerized 3-ethyl-1-hexene (3EH1) at 100°C for a 2 hour reactor residence time with 0.45 MPa (50 psig) of hydrogen. | | | | | | | |

The data clearly show that catalyst A performed better than any of the other catalysts in the series. However, it is interesting to note that the polymerization of 3-ethyl-1-hexene did not perform as well. For example, comparing runs 36 with 39, it is apparent that 3-methyl-1-pentene polymerized to yield about 4200 percent more polymer than 3-ethyl-1-hexene. Upon cloaer inspection it is also apparent that the polymerization of 3-ethyl-1-hexene generated about 1200 percent more solubles than did the 3-methyl-1-pentene. Therefore, it can clearly be seen that while catalyst A is not particularly effective in the polymerization of 3-ethyl-1-hexene it is the catalyst of choice for polymerizing alpha-olefins which have a methyl branch at the 3-position.

### Example IV: Reactor Temperature Effect on the Polymerization of 3MB1 and 3MP1 with Catalyst A

A series of runs was conducted to determine the optimum temperature at which maximum productivity is obtained. The procedure utilized to attain the data below was similar to the procedure used in Example II. The specified temperature was used for 2 hours with 0.45 MPa (50 psig) of hydrogen and 5.0 milliliters of TEA solution. The data are summarized below.

**Table IV**

| Run | Monomer | Reactor Temp (°C) | Amount of Catalyst (g) | Polymer Yield | Reactor-Solubles | | Productivity (g/g) |
|---|---|---|---|---|---|---|---|
| | | | | | (g) | (wt%) | |
| 40 | 3MB1 | 50 | 0.2629 | 92.46 | 13.32 | 12.6 | 402 |
| 41 | 3MB1 | 60 | 0.2792 | 162.92 | 17.31 | 9.6 | 646 |
| 42 | 3MB1 | 70 | 0.2844 | 199.11 | 20.37 | 9.3 | 772 |
| 43 | 3MB1 | 80 | 0.3506 | 279.43 | 27.90 | 9.1 | 877 |
| 44 | 3MB1 | 90 | 0.3531 | 310.29 | 25.79 | 7.7 | 952 |
| 45 | 3MB1 | 100 | 0.3388 | 338.61 | 28.90 | 7.9 | 1085 |
| 46 | 3MB1 | 110 | 0.2920 | 257.75 | 28.02 | 9.8 | 979 |
| 47 | 3MB1 | 120 | 0.3031 | 228.57 | 25.13 | 9.9 | 837 |
| 48 | 3MP1 | 60 | 0.2312 | 241.80 | 32.73 | 11.9 | 1187 |
| 49 | 3MP1 | 80 | 0.1856 | 286.71 | 27.25 | 8.7 | 1692 |
| 50 | 3MP1 | 90 | 0.1536 | 297.07 | 22.45 | 7.0 | 2080 |
| 51 | 3MP1 | 95 | 0.1766 | 377.40 | 19.49 | 4.9 | 2247 |
| 52 | 3MP1 | 100 | 0.1763 | 375.23 | 23.34 | 5.9 | 2261 |
| 53 | 3MP1 | 110 | 0.1818 | 296.62 | 25.20 | 7.8 | 1770 |
| 54 | 3MP1 | 120 | 0.1562 | 204.00 | 26.65 | 11.6 | 1477 |

The data in Table IV show the effect of the reactor temperature on 3MB1 and 3MP1 polymerization. To maximize productivity, the data indicate that the reactor temperature range between 60°C and 120°C is preferred. Operating within this temperature range also minimizes the total level of solubles generated. Consequently, it it preferred to operate within these temperature ranges listed in Table IV in order to generate maximum productivity while minimizing the amount of reactor solubles.

### Example V: Reactor Residence Time Effect on the Polymerization of 3MB1 and 3MP1 with Catalyst A

A series of runs was conducted to show the effect of reactor residence time on the polymerization of 3MB1 and 3MP1. The procedure utilized in this run was similar to the procedure utilized in Example II. A reactor temperature of 100°C for the specified residence time was used along with 0.45 MPa (50 psig) of hydrogen for runs 63-68 and 0.27 MPa (25 psig) of hydrogen for runs 55-62. The data are summarized below.

**Table V**

| Run | Monomer | Residence Time (hr) | Amount of Catalyst (g) | Polymer Yield | Reactor-Solubles | | Productivity (g/g) |
|---|---|---|---|---|---|---|---|
| | | | | | (g) | (wt%) | |
| 55 | 3MB1 | 0.25 | 0.1447 | 72.15 | 90.09 | 11.2 | 561 |
| 56 | 3MB1 | 0.50 | 0.1636 | 126.73 | 13.80 | 9.8 | 859 |
| 57 | 3MB1 | 0.75 | 0.1445 | 122.80 | 12.81 | 9.5 | 938 |
| 58 | 3MB1 | 1.00 | 0.1558 | 148.63 | 15.77 | 9.6 | 1055 |
| 59 | 3MB1 | 2.00 | 0.1512 | 148.28 | 14.84 | 9.1 | 1079 |
| 60 | 3MB1 | 3.00 | 0.1683 | 176.98 | 16.22 | 8.4 | 1148 |
| 61 | 3MB1 | 4.00 | 0.1593 | 201.70 | 17.39 | 7.9 | 1375 |
| 62 | 3MB1 | 5.00 | 0.1703 | 204.53 | 14.90 | 6.8 | 1288 |
| 63 | 3MP1 | 0.25 | 0.2398 | 215.88 | 24.02 | 10.0 | 1000 |
| 64 | 3MP1 | 0.50 | 0.1597 | 259.63 | 27.65 | 9.6 | 1799 |
| 65 | 3MP1 | 1.00 | 0.1784 | 316.15 | 21.85 | 6.5 | 1895 |
| 66 | 3MP1 | 1.50 | 0.1654 | 282.78 | 20.62 | 6.8 | 1834 |
| 67 | 3MP1 | 2.00 | 0.1838 | 335.26 | 21.80 | 6.1 | 1943 |
| 68 | 3MP1 | 3.00 | 0.1811 | 380.57 | 21.43 | 5.3 | 2220 |

The data in Table V above illustrate that the productivity increases from a reaidence time of 0 hours (time at which the reactor reaches the desired operating temperature) to about 1 hour, after which little gain in productivity is realized. While not wanting to be bound by theory, it is believed that after about 1 hour the catalyst begins to decay which leads to only modest gains in productivity at longer residence times. Additionally, it should be noted that the amount of reactor solubles generated in this reaction tends to decrease with residence time. Therefore, it is apparent that there are competing considerations between lowering the amount of reactor solubles by increasing the reactor residence time and generating maximum economical productivity with a lower reactor residence time.

### Example VI: Hydrogen Concentration Effect on the Polymerization of 3MB1 and 3MP1 with Catalyst A

A series of runs was done to illustrate the effect of the hydrogen concentration on the polymerization of 3MB1 and 3MP1. These runs were conducted using procedures similar to the procedures used in Example II. A reactor temperature of 100°C was used for a 2 hour residence time with the specified amount of hydrogen. The data are summarized below.

**Table VI**

| Run | Monomer | Hydrogen MPa (psig) | Amount of Catalyst (g) | Polymer Yield | Reactor-Solubles | | Productivity (g/g) |
|---|---|---|---|---|---|---|---|
| | | | | | (g) | (wt%) | |
| 69 | 3MB1 | 0 | 0.3828 | 113.52 | 6.40 | 5.3 | 313 |
| 70 | 3MB1 | 0.27 (25) | 0.4119 | 309.98 | 14.92 | 4.6 | 789 |
| 71 | 3MB1 | 0.45 (50) | 0.4278 | 397.64 | 18.30 | 4.4 | 972 |
| 72 | 3MB1 | 0.62 (75) | 0.4399 | 471.65 | 20.32 | 4.1 | 1118 |
| 73 | 3MB1 | 0.79 (100) | 0.4217 | 491.10 | 21.77 | 4.2 | 1216 |
| 74 | 3MB1 | 1.14 (150) | 0.4244 | 526.05 | 17.44 | 3.2 | 1281 |
| 75 | 3MB1 | 1.48 (200) | 0.4214 | 539.97 | 17.54 | 3.2 | 1323 |
| 76 | 3MB1 | 2.17 (300) | 0.3996 | 513.23 | 24.01 | 4.5 | 1344 |
| 77 | 3MB1 | 2.86 (400) | 0.3938 | 509.27 | 31.02 | 5.7 | 1372 |
| 78 | 3MP1 | 0 | 0.1649 | 6.40 | 12.36 | 65.9 | 114 |
| 79 | 3MP1 | 0.27 (25) | 0.2077 | 203.50 | 12.33 | 5.7 | 1039 |
| 80 | 3MP1 | 0.45 (50) | 0.1833 | 307.82 | 24.94 | 7.5 | 1815 |
| 81 | 3MP1 | 0.79 (100) | 0.1694 | 336.91 | 26.50 | 7.3 | 2145 |
| 82 | 3MP1 | 1.14 (150) | 0.2048 | 413.88 | 25.64 | 5.8 | 2146 |
| 83 | 3MP1 | 1.48 (200) | 0.1809 | 449.58 | 26.96 | 5.7 | 2634 |
| 84 | 3MP1 | 2.86 (400) | 0.1805 | 497.79 | 28.74 | 5.5 | 2917 |

The data above illustrates that the productivity starts to level off after a charge of 0.79 MPa (100 psig) of hydrogen. Since, in general, increased hydrogen levels result in higher flow rates, it is usually desirable to keep the hydrogen level at an amount lower than what would optimize productivity. That is, productivity is sacrificed at the expense of processing characteristics and properties.

### Example VII: Cocatalyst Survey with Catalyst A

In the previous catalyst screening study (see Example II), triethylaluminum was used exclusively as the cocatalyst for polymerizing 3MB1. To determine if some other cocatalyst provided a better result with the catalyst used in this invention, a series of runs was performed varying the cocatalyst from run to run. To insure the comparisons would be meaningful, the aluminum to titanium mole ratio (Al/Ti) and all of the reactor conditions were held constant. The procedure utilized in this example was similar to the procedure utilized in Example II. A reactor temperature of 100°C and a reactor residence time of 2 hours was used. Additionally, 0.45 MPa (50 psig) of hydrogen was used and the Al/Ti mole ratio was equal to about 40. The data are summarized below.

**Table VII**

| Run | Cocatalyst | Productivity (g/g) | Solubles (wt%) Reactor | Flow Rate |
|---|---|---|---|---|
| 85 | TMA | 940 | 7.5 | 95 |
| 86 | TEA | 1199 | 8.4 | 48 |
| 87 | TIBA | 983 | 5.8 | 35 |
| 88 | DEAC | 521 | 10.9 | 255 |
| 89 | EASC | 40 | 38.8 | > 1000 |
| 90 | EADC | 10 | 100.0 | - |

(1) TMA = Trimethylaluminum
(2) TEA = Triethylaluminum
(3) TIBA = Triisobutylaluminum
(4) DEAC = Diethylaluminum chloride
(5) EASC = Ethylaluminum sesquichloride
(6) EADC = Ethylaluminum dichloride
(7) The flow rate was measured using the procedure similar to ASTM D1238-82. This flow rate was measured at 320°C under a 5 kilogram load after a 5 minute hold period. During the hold the resin was weighted with a 360 gram load.

None of the other cocatalysts screened were any more effective than TEA for optimizing the productivity of 3MB1. All of the trialkylaluminums (runs 85-87) were effective cocatalysts. Substituting alkyl groups with chlorides (as in runs 88-90), however, resulted in progressively lower productivities and higher reactor solubles.

### Example VIII: The Aluminum/Titanium Mole Ratio Effect on the Polymerization of 3MB1

A series of runs with increasing amount of TEA was used to determine the effect of the Al/Ti mole ratio on the polymerization of 3MB1. The procedure utilized was similar to the procedure utilized in Example II. A reactor temperature of 100°C for 2 hours was used. Additionally, a 0.45 MPa (50 psig) hydrogen charge was utilized along with TEA as a cocatalyst.

**Table VIII**

| Run | Al/Ti Mole Ratio | Productivity (g/g) | Solubles (wt%) Reactor | Flow Rate |
|---|---|---|---|---|
| 91 | 1 | 0 | - | --- |
| 92 | 2.5 | 10 | 50.0 | --- |
| 93 | 3.75 | 25 | 31.7 | --- |
| 94 | 5 | 199 | 17.6 | 959 |
| 95 | 10 | 564 | 8.8 | 97 |
| 96 | 15 | 945 | 6.8 | 71 |
| 97 | 20 | 963 | 5.7 | 59 |
| 98 | 30 | 1022 | 4.9 | 47 |
| 99 | 40 | 1061 | 6.2 | 48 |
| 100 | 50 | 1076 | 6.9 | 83 |
| 101 | 60 | 1124 | 6.6 | 80 |

The data above show that a Al/Ti mole ratio of 15 results in near optimum results. Increasing levels of TEA do not afford significant increases in productivity, but increasing the Al/Ti mole ratio to almost 50 tended to minimize the polymer flow rate. Furthermore, an Al/Ti mole ratio of 30 appears to be optimum for minimizing the amount of reactor solubles. Consequently, it is clear to see that the Al/Ti mole ratio should preferably be between 10 to 60.

### Example IX: The Effect of a TEA/DEAC Cocatalyst Mixture on the Polymerization of 3MB1

In the polymerization of propylene with certain Ziegler type catalysts, a mixture of TEA and DEAC as a cocatalyst system has been shown to result in enhanced productivity at a specific composition of the cocatalyst mixture. To determine if such an effect might occur in the polymerization of 3MB1 with the catalyst used in this invention, a series of runs was performed in which the composition of the TEA/DEAC cocatalyst mixture was constantly changed. The procedure utilized in this example was similar to the procedure utilized in Example II. A reactor temperature of 100°C for 2 hours was utilized. Additionally, 0.45 MPa (50 psig) of hydrogen was included and the Al/Ti mole ratio was held constant at about 40. The data are summarized below.

**Table IX**

| Run | % DEAC | Productivity (g/g) | Solubles (wt%) Reactor | Flow Rate |
|---|---|---|---|---|
| 102 | 0 | 1199 | 8.4 | 73 |
| 103 | 10 | 1175 | 8.7 | 74 |
| 104 | 20 | 1076 | 7.8 | 109 |
| 105 | 30 | 1054 | 8.4 | 137 |
| 106 | 40 | 1036 | 8.3 | 133 |
| 107 | 50 | 973 | 8.3 | 182 |
| 108 | 60 | 994 | 7.4 | 138 |
| 109 | 70 | 884 | 7.5 | 146 |
| 110 | 80 | 751 | 9.0 | 177 |
| 111 | 90 | 536 | 7.4 | 233 |
| 112 | 100 | 521 | 10.9 | 300 |

As shown in the data above, enhanced productivity was not observed. Productivity dropped as the percent composition of DEAC in the cocatalyst mixture was increased. An opposite effect was observed in the flow rate. Therefore, the effect observed in propylene type polymerizations was not observed in the polymerization of 3-methyl-1-butene.

## Claims

1. A process for polymerizing one or more α-olefins having at least 5 carbon atoms and a methyl branch at the 3-position in the presence of a catalyst system, characterized by using a catalyst system comprising
(I) a catalyst obtained by comminuting
(a) at least one aluminum halide
(b) at least one electron donor
(c) at least one metal compound wherein the metal is selected from chromium, hafnium, molybdenum, niobium, tantalum, titanium, tungsten, vanadium, zirconium, and mixtures thereof, and
(d) a salt containing a metal selected from barium, beryllium, calcium, magnesium, strontium, zinc, and mixtures thereof
and then contacting twice the obtained comminuted solid with a combination of TiCl₄ with at least one hydrocarbon, and
(II)a trialkylaluminum cocatalyst.

2. The process of claim 1 wherein said aluminum halide (a) is aluminum trichloride.

3. The process of claim 1 or 2 wherein said electron donor (b) is selected from ethylbenzoate, methoxybenzene and mixtures thereof.

4. The process of any of the preceding claims wherein said metal in said metal compound (c) is titanium.

5. The process of claim 4 wherein said metal compound is titanium tetrachloride.

6. The process of any of the preceding claims wherein said metal of said salt (d) is magnesium.

7. The process of claim 6 wherein said salt is magnesium dichloride.

8. The process of any of the preceding claims wherein said trialkylaluminum cocatalyst (II) is selected from trimethylaluminum, triethylaluminum, triisobutylaluminum and mixtures thereof.

9. The process of any of the preceding claims wherein said α-olefin is selected from 3-methyl-1-butene, 3-methyl-1-pentene and mixtures thereof.

10. The process of any of the preceding claims comprising a polymerization temperature from 60-120°C and a reactor residence time from 0.1 to 4 hours, preferably a polymerization temperature from 90-110°C and a reactor residence time from 0.25 to 2 hours.

11. The process of any of the preceding claims wherein said polymerization is carried out in the presence of hydrogen.

12. The process of any of claims 4-11 utilizing an aluminum/titanium mole ratio from 10:1 - 60:1.

## Patentansprüche

1. Verfahren zur Polymerisation von einem oder mehreren α-Olefinen mit mindestens 5 Kohlenstoffatomen und einer Methylverzweigung in der 3-Stellung in Gegenwart eines Katalysatorsystems, dadurch gekennzeichnet, daß man ein Katalysatorsystem verwendet, das folgende Bestandteile enthält:
(I) einen Katalysator, der erhalten worden ist durch Zerkleinern von
(a) mindestens einem Aluminiumhalogenid,
(b) mindestens einem Elektronendonator,
(c) mindestens einer Metallverbindung, wobei das Metall unter Chrom, Hafnium, Molybdän, Niob, Tantal, Titan, Wolfram, Vanadium, Zirkonium und Gemischen davon ausgewählt ist, und
(d) einem Salz mit einem Gehalt an einem Metall, das unter Barium Beryllium, Calcium, Magnesium, Strontium, Zink und Gemischen davon ausgewählt ist,
und durch anschließendes zweifaches Kontaktieren des erhaltenen zerkleinerten Feststoffs mit einer Kombination aus TiCl₄ mit mindestens einem Kohlenwasserstoff, und
(II) einem Trialkylaluminium-Cokatalysator.

2. Verfahren nach Anspruch 1, wobei es sich bei dem Aluminiumhalogenid (a) um Aluminiumtrichlorid handelt.

3. Verfahren nach Anspruch 1 oder 2, wobei der Elektronendonator (b) unter Ethylbenzoat, Methoxybenzol und Gemischen davon ausgewählt ist.

4. Verfahren nach einem der vorstehenden Ansprüche, wobei es sich bei dem Metall in der Metallverbindung (c) um Titan handelt.

5. Verfahren nach Anspruch 4, wobei es sich bei der Metallverbindung um Titantetrachlorid handelt.

6. Verfahren nach einem der vorstehenden Ansprüche, wobei es sich bei dem Metall des Salzes (d) um Magnesium handelt.

7. Verfahren nach Anspruch 6, wobei es sich bei dem Salz um Magnesiumdichlorid handelt.

8. Verfahren nach einem der vorstehenden Ansprüche, wobei der Trialkylaluminium-Cokatalysator (II) ausgewählt ist unter Trimethylaluminium, Triethylaluminium, Triisobutylaluminium und Gemischen davon.

9. Verfahren nach einem der vorstehenden Ansprüche, wobei das α-Olefin ausgewählt ist unter 3-Methyl-1-buten, 3-Methyl-1-penten und Gemischen davon.

10. Verfahren nach einem der vorstehenden Ansprüche, umfassend eine Polymerisationstemperatur von 60-120°C und eine Reaktorverweilzeit von 0,1 bis 4 Stunden und vorzugsweise eine Polymerisationstemperatur von 90-110°C und eine Reaktorverweilzeit von 0,25 bis 2 Stunden.

11. Verfahren nach einem der vorstehenden Ansprüche, wobei die Polymerisation in Gegenwart von Wasserstoff durchgeführt wird.

12. Verfahren nach einem der Ansprüche 4 bis 11 unter Verwendung eines Aluminium/Titan-Molverhältnisses von 10:1 bis 60:1.

## Revendications

1. Un procédé de polymérisation d'une ou plusieurs α-oléfines ayant au moins 5 atomes de carbone et une ramification méthyle en position 3 en présence d'un système de catalyseur, caractérisé par l'utilisation d'un système de catalyseur comprenant :
(I) un catalyseur obtenu en broyant :
(a) au moins un halogénure d'aluminium
(b) au moins un donneur d'électrons
(c) au moins un composé de métal dans lequel le métal est choisi parmi le chrome, l'hafnium, le molybdène, le niobium, le tantale, le titane, le tungstène, le vanadium, le zirconium et leurs mélanges, et
(d) un sel contenant un métal choisi parmi le baryum, le béryllium, le calcium, le magnésium, le strontium, le zinc et leurs mélanges et en mettant ensuite en contact deux fois le solide broyé obtenu avec une combinaison de TiCl₄ avec au moins un hydrocarbure, et
(II) un cocatalyseur de trialkylaluminium.

2. Le procédé selon la revendication 1, dans lequel ledit halogénure d'aluminium (a) est le trichlorure d'aluminium.

3. Le procédé selon la revendication 1 ou 2, dans lequel ledit donneur d'électrons (b) est choisi parmi l'éthylbenzoate, le méthoxybenzène et leurs mélanges.

4. Le procédé selon l'une quelconque des revendications précédentes, dans lequel ledit métal dans ledit composé de métal (c) est le titane.

5. Le procédé selon la revendication 4, dans lequel ledit composé de métal et le tétrachlorure de titane.

6. Le procédé selon l'une quelconque des revendications précédentes, dans lequel ledit métal dudit sel (d) est le magnésium.

7. Le procédé selon la revendication 6, dans lequel ledit sel est le dichlorure de magnésium.

8. Le procédé selon l'une quelconque des revendications précédentes, dans lequel ledit cocatalyseur de trialkylaluminium (II) est choisi parmi le triméthylaluminium, le triéthylaluminium, le triisobutylaluminium et leurs mélanges.

9. Le procédé selon l'une quelconque des revendications précédentes, dans lequel ladite α-oléfine est choisie parmi le 3-méthyl-1-butène, le 3-méthyl-1-pentène et leurs mélanges.

10. Le procédé selon l'une quelconque des revendications précédentes comprenant une température de polymérisation de 60 à 120°C et une durée de séjour dans le réacteur de 0,1 à 4 heures, de préférence une température de polymérisation de 90 à 110°C et une durée de séjour dans le réacteur de 0,25 à 2 heures.

11. Le procédé selon l'une quelconque des revendications précédentes, dans lequel ladite polymérisation est mise en oeuvre en présence d'hydrogène.

12. Le procédé selon l'une quelconque des revendications 4 à 11 utilisant un rapport molaire aluminium/titane de 10:1 à 60:1.
